# EUROPÄISCHE PATENTSCHRIFT

(11) **EP 0 690 615 B1**
(45) Veröffentlichungstag und Bekanntmachung des Hinweises auf die Patenterteilung: **22.03.2000**
(21) Anmeldenummer: 95201597.2
(22) Anmeldetag: 15.06.1995
(51) Int. Cl.: H04N 5/073, H04N 7/62, H04N 5/956

(54) **Bildwiedergabeanordnung**
Image reproducing device
Dispositif de reproduction d'images

(30) Priorität: 28.06.1994 DE 4422615
(43) Veröffentlichungstag der Anmeldung: 03.01.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Jacobsen, H.-Michael, Dr., Wendenstrasse 35c, D-20097 Hamburg (DE)
(74) Vertreter: von Laue, Hanns-Ulrich, Dipl.-Ing.

(56) Entgegenhaltungen:
- EP-A- 0 202 683
- EP-A- 0 572 024
- GB-A- 2 103 457
- PATENT ABSTRACTS OF JAPAN vol. 018, no. 515 (E-1611), 28.September 1994 & JP-A-06 178149 (MATSUSHITA ELECTRIC IND CO LTD), 24.Juni 1994,

## Beschreibung

Die Erfindung betrifft eine Anordnung zur Wiedergabe dekomprimierter Video- und/oder Audio-Daten in einem Video- und einem Audio-Wiedergabetakt.

Video- und/oder Audio-Daten, die in komprimierter Form vorliegen und die zur Wiedergabe dekomprimiert werden, werden in einem festen Wiedergabetakt dargestellt. Für kombinierte Video und/oder Audio-Daten können diese Takte gegebenenfalls unabhängig voneinander sein, jedenfalls kann es sich um Takte verschiedener Frequenz handeln.

Soll ein derartiges dekomprimiertes Video- und/oder Audio-Signal zusammen mit einem anderen Video- und gegebenenfalls Audiosignal dargestellt werden, ergibt sich das Problem, daß diese Daten zueinander nicht synchronisiert sind, was Störungen in Bild und/oder Ton verursacht. EP 572 024 beschreibt eine Vorrichtung zur gemeinsamen Darstellung von MPEG- und VGA-Videodaten.

Es ist Aufgabe der Erfindung, eine Anordnung anzugeben, die diese Probleme beseitigt.

Diese Aufgabe wird erfindungsgemäß dadurch gelöst, daß Mittel zur Erzeugung des Video- und/oder des Audio-Wiedergabetaktes vorgesehen sind, welche diese Wiedergabetakte aus einem extern zugeführten digitalen Videosignal ableiten.

Das extern zugeführte digitale Videosignal wird also zur Erzeugung der Wiedergabetaktes des Video- und/oder Audiosignals, das aus komprimierten Daten entstanden ist, herangezogen. Damit wird das Videosignal, das aus komprimierten Daten gewonnen wurde, in einem Wiedergabetakt wiedergegeben, der in einer festen Beziehung zu dem Takt des extern zugeführten digitalen Videosignals steht. Infolgedessen sind diese beiden Videosignale miteinander synchronisiert, so daß eine kombinierte Darstellung möglich ist. Diese kann beispielsweise in einer Überblendung zwischen den Signalen, in einer Mischung der Signale oder ähnlichem bestehen. Auch beim einfachen Umschalten zwischen den beiden Signalen entstehen keine Störungen mehr.

Im einfachsten Fall können die Wiedergabetakte zur Wiedergabe der komprimierten Video- und/oder Audio-Daten, wie nach einer Ausgestaltung der Erfindung vorgesehen ist, aus dem Abtasttakt des extern zugeführten Videosignals abgeleitet werden. Jedes digitale Videosignal hat einen Abtasttakt, der beispielsweise für die dekomprimierten Video-Daten unmittelbar als Wiedergabetakt herangezogen werden kann. Damit ist eine Synchronisierung der beiden Videosignale zwangsläufig gegeben.

Der Abtasttakt des extern zugeführten Videosignals kann dabei, wie nach einer weiteren Ausgestaltung der Erfindung vorgesehen ist, aus dessen Horizontal-Synchronimpulsen abgeleitet sein. Dies hat den Vorteil, daß auch bei Schwankungen der Zeitbasis, wie sie beispielsweise Videorecorder erzeugen, eine einwandfreie Wiedergabe beider Videosignale gewährleistet ist.

Die komprimierten Video- und/oder Audio-Daten, die vor Wiedergabe dekomprimiert werden, können beispielsweise, wie gemäß einer weiteren Ausgestaltung vorgesehen ist, gemäß der Motion Pictures Expert Group (MPEG) -Empfehlung Komprimierungs- und Dekomprimierungs-Verfahren setzt sich für digitale Video-Daten immer mehr durch und beinhaltet auch Vorschriften für die Komprimierung der Audio-Daten.

Gemäß einer weiteren Ausgestaltung der Erfindung ist vorgesehen, daß die Mittel zur Erzeugung des Video- und des Audio-Wiedergabetaktes wenigstens einen Discrete Time Oszillator (DTO) aufweisen, welcher in Abhängigkeit des Abtasttaktes des extern zugeführten Videosignals getaktet wird.

Ein derartiger Discrete Time Oszillator (DTO) weist einen Eingangsaddierer auf, dem einerseits ein konstantes Eingangssignal und andererseits das Ausgangssignal eines Registers zugeführt wird, dessen Eingang mit dem Ausgang der Addierstufe verbunden ist. Dadurch, daß der Überlauf des Ausgangssignals der Addierstufe nicht berücksichtigt wird, erzeugt ein solcher Oszillator an seinem Ausgang digitale Daten, die ein sägezahnförmiges Signal repräsentieren. Aus diesem Signal kann ein sinusförmiges Signal oder auch ein rechteckförmiges Signal je nach Wunsch abgeleitet werden. Der Arbeitstakt dieses DTO ergibt sich aus dem Takt, mit dem das Register getaktet wird. Für die erfindungsgemäße Anordnung ist es vorteilhaft, dieses Register in Abhängigkeit des Abtasttaktes des extern zugeführten Videosignals zu takten, da somit das Ausgangssignal des DTO von dem Abtasttakt des Videosignals abhängig ist. Das Ausgangssignal des DTO kann wiederum zur Erzeugung des Video- und/oder des Audio-Wiedergabetaktes der dekomprimierten Daten eingesetzt werden. Es ergibt sich somit eine Abhängigkeit zwischen dem Abtasttakt des externen Videosignals und den Wiedergabetakten der dekomprimierten Video- und/oder Audio-Daten. Dabei können jedoch die Abtastfrequenzen verschieden sein. Es können auch die Video-Abtastfrequenzen verschieden gewählt werden, wenn auch zur Erzeugung des Video-Wiedergabetaktes ein DTO eingesetzt wird. Ein weiterer Vorteil besteht darin, daß die Wiedergabetaktfrequenzen für die beiden Signale frei gewählt werden können und sogar je nach Eingangssignal umgeschaltet werden können. Das heißt es können verschiedene Wiedergabetaktfrequenzen gewählt werden, die jedoch jeweils abhängig von dem Abtasttakt des extern zugeführten Videosignals sind.

Eine weitere vorteilhafte Ausgestaltung der Erfindung besteht darin, daß, wie gemäß einem weiteren Unteranspruch vorgesehen ist, der Video-Wiedergabetakt aus dem Audio-Wiedergabetakt oder der Audio-Wiedergabetakt aus dem Video-Wiedergabetakt abgeleitet wird. Damit müssen die Wiedergabetakte für ein Video- und ein Audiosignal nicht jeweils einzeln aus dem extern zugeführten digitalen Videosignal gewonnen werden, sondern es kann nur einer der Takte direkt aus dem Videosignal gewonnen werden, wohingegen der andere Takt aus demjenigen Takt abgeleitet ist, der seinerseits von dem extern zugeführten Videosignal abgeleitet ist.

Für die Dekomprimierung nach der MPEG-Empfehlung kodierter Daten ist ein sogenannter System Time Clock (STC) erforderlich, der eine Frequenz von 90 kHz aufweist. Für die erfindungsgemäße Anordnung besteht vorteilhaft die Möglichkeit, diesen STC-Clock aus dem in Abhängigkeit des extern zugeführten Videosignals gewonnenen Video- und/oder Audio-Wiedergabetakt abzuleiten. Damit wird bereits die Dekomprimierung der Daten an Taktschwankungen des externen Videosignals angepaßt.

Die erfindungsgemäße Anordnung kann vorteilhaft, wie gemäß einer weiteren Ausgestaltung der Erfindung vorgesehen ist, in einem Computer, insbesondere einem Personal-Computer, eingesetzt werden, der neben der Dekomprimierung der Video- und/oder Audio-Daten auch die Wiedergabe steuern kann oder sogar über den Computer-Bildschirm selber vornimmt. In diesem Falle ist dem Computer das externe digitale Videosignal zuzuführen, aus dem die Wiedergabetakte, beispielsweise auf einer Steckkarte, die mit dem Computerbus verbunden ist, erzeugt wird.

Nachfolgend wird ein Ausführungsbeispiel der Erfindung näher erläutert.

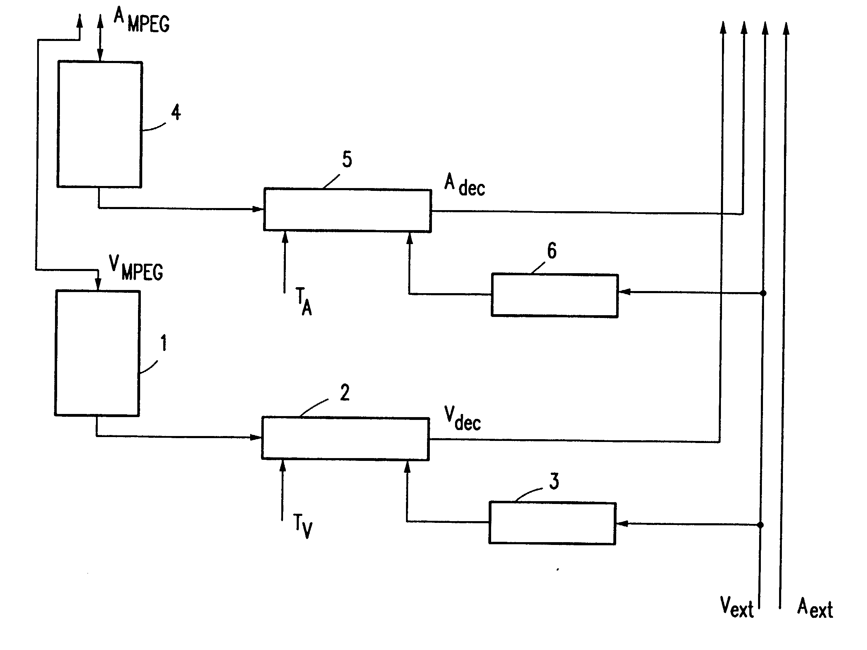

Die Zeichnung zeigt eine Figur, in der sowohl komprimierte Video- wie auch komprimierte Audio-Daten, beispielsweise gemäß der MPEG-Empfehlung, dekomprimiert werden. Die Wiedergabetakte werden in Abhängigkeit eines extern zugeführten Videosignals erzeugt, das in der Figur mit Vₑₓₜ gekennzeichnet ist. Zu diesem extern zugeführten Videosignal kann gegebenenfalls auch noch ein Audiosignal gehören, das in der Figur mit Aₑₓₜ gekennzeichnet ist. Wenigstens bei dem Signal Vₑₓₜ handelt es sich um ein digitales Signal, das also einen Abtasttakt aufweist, der vorteilhaft zur Erzeugung der Wiedergabetakte der dekomprimierten Video- und/oder Audiosignale herangezogen werden kann. Es wird als Wiedergabetakt häufig eine Frequenz von 27 MHz gewählt, welche vorteilhaft aus dem Horizontal-Synchron-Raster des Video-Signals abgeleitet sein kann.

Die Figur zeigt einen Speicher 1, bei dem es sich um einen Bildspeicher handelt, in dem ein in der Figur mit V_{MPEG} gekennzeichnetes Signal abgespeichert und dekomprimiert wird. Dieses nachder MPEG-Empfehlung komprimierte Signal wird in dem Bildspeicher mittels externer, in der Figur nicht dargestellter, Steuerungen dekomprimiert und als digitales Bildsignal bereitgestellt. In Abhängigkeit eines festen Quarztaktes T_{V} wird dieses Signal in einen First-In-First-Out-Speicher 2 eingelesen. Insoweit ist dekomprimierte Videosignal noch nicht auf den Takt des extern zugeführten Videosignals Vₑₓₜ synchronisiert. Der Auslesevorgang aus dem First-In-First-Out (FIFO) Speicher 2 geschieht in Abhängigkeit des Ausgangssignals eines DTO (Discrete Time Oszillator), dem eingangsseitig der Abtasttakt des Videosignals Vₑₓₜ zugeführt ist. Innerhalb des DTO wird in in der Figur nicht dargestellter Weise mit diesem Abtasttakt des Signales Vₑₓₜ ein Register getaktet, dessen Ausgangssignal auf einen Eingang einer Addierstufe rückgekoppelt ist. Dem anderen Eingang der Addierstufe ist in der Figur nicht dargestellter Weise ein konstantes Signal zugeführt. Das Ausgangssignal der Addierstufe gelangt auf das getaktete Register, wobei jedoch der Überlauf des Ausgangssignals der Addierstufe diesem Register nicht zugeführt wird. Das Register selbst erzeugt digitale Daten, die ein infolge der Nichtberücksichtigung des Überlaufsignals sägezahnförmigen Verlauf repräsentieren. Dem Register können gegebenenfalls noch weitere Stufen nachgeschaltet sein, die aus diesen Daten, die einen sägezahnförmigen Verlauf repräsentieren, ein sinusförmiges oder ein rechteckförmiges Signal als Taktsignal generiert. Mittels dieses Taktsignals wird das Auslesen der Daten aus dem Fifo-Speicher 2 gesteuert. Diese dekomprimierten Daten, die in der Figur mit V_{dec} gekennzeichnet sind, sind nunmehr bezüglich ihres Taktes auf das externe Videosignal Vₑₓₜ synchronisiert und können gegebenenfalls gemeinsam mit diesem wiedergegeben werden.

Es sei noch erwähnt, daß gegebenenfalls der Auslesetakt aus dem FIFO 2 mit dem Abtasttakt des externen Videosignals Vₑₓₜ identisch sein kann. In diesem Falle kann der DTO 3 entfallen.

Gemäß der Figur ist ein weiterer Speicher 4 vorgesehen, der Audio-Daten aufnimmt, die beispielsweise dem Videosignal V_{MPEG} zugeordnet sein können und die gemeinsam mit diesem wiedergegeben werden sollen. Diese Daten weisen jedoch einen sehr viel niedrigeren Abtasttakt auf, beispielsweise 44,1 kHz. Diese Daten sind in der Figur mit A_{MPEG} gekennzeichnet und werden in dem Bildspeicher 4 mittels externer Steuerungen, die in der Figur nicht dargestellt sind, bereitgestellt. Diese Daten werden in einen FIFO-Speicher 5 in Abhängigkeit eines festen Quarztaktes T_{A} eingelesen.

Das Auslesen der Daten aus dem FIFO-Speicher 5 geschieht in Abhängigkeit des Ausgangssignales eines weiteren DTO 6, dem eingangsseitig der Abtasttakt des externen Video-signals Vₑₓₜ zugeführt ist. Dieser DTO arbeitet im Prinzip in der gleichen Weise wie der DTO 3, erzeugt jedoch einen Ausgangstakt deutlich niedrigerer Frequenz, der entsprechend der gewünschten Frequenz des Wiedergabetaktes für die Audio-Daten ausgelegt ist. In Abhängigkeit dieses Taktes werden die Daten, die in der Figur mit A_{dec} gekennzeichnet ist, ausgelesen und stehen zur Wiedergabe bereit.

Damit ist sowohl der Wiedergabetakt der dekomprimierten Video-Daten wie auch der Wiedergabetakt der dekomprimierten Audio-Daten an den Abtasttakt des extern zugeführtn Videosignals Vₑₓₜ angepaßt. Gegebenenfalls auftretende Schwankungen dieses Abtasttaktes, beispielsweise ausgelöst durch Schwankungen der Zeitbasis dieses Signals, werden in den Wiedergabetakten sowohl der Daten des dekomprimierten Videosignals wie auch derer des Audiosignals berücksichtigt. Damit ist eine gemeinsame Darstellung beider Signale möglich, beispielsweise in Form von Mischen der Signale oder Überblendung zwischen den Videosignalen. Auch eine synchrone Wiedergabe der dekomprimierten Audio-Daten in Relation zu den dekomprimierten Video-Daten ist sichergestellt.

Die Anordnung gemäß der Figur kann beispielsweise in einem Computer auf einer Steckkarte vorgesehen sein, die mit dem Bussystem des Computers verbunden ist. Der Steckkarte wird das externe digitale Videosignal zugeführt. Auf ihr ist auch die weitere Anordnung gemäß der Figur vorgesehen. Die Wiedergabe der Daten kann auf dem Computermonitor vorgenommen werden; die Daten können aber auch extern zur Wiedergabe auf einem anderen Bildwiedergabegerät bereitgestellt werden .

## Patentansprüche

1. Anordnung zur Wiedergabe dekomprimierter Video- und/oder Audio-Daten in einem Video- und einem Audio-Wiedergabetakt,
dadurch gekennzeichnet, daß Mittel zur Erzeugung des Video- und/oder des Audio-Wiedergabetaktes vorgesehen sind, welche diese Wiedergabetakte aus einem extern zugeführten digitalen Videosignal ableiten.

2. Anordnung nach Anspruch 1,
dadurch gekennzeichnet, daß die Mittel die Wiedergabetakte aus dem Abtasttakt des extern zugeführten Videosignals ableiten.

3. Anordnung nach Anspruch 2,
dadurch gekennzeichnet, daß der Abtasttakt des extern zugeführten Videosignals aus dessen Horizontal-Synchronimpulsen abgeleitet ist.

4. Anordnung nach einem der Ansprüche 1 bis 3,
dadurch gekennzeichnet, daß die Video- und/oder Audio-Daten gemäß der Motion Pictures Expert Group - Empfehlung nach ISO 11172 dekomprimiert werden.

5. Anordnung nach einem der Ansprüche 1 bis 4,
dadurch gekennzeichnet, daß die Mittel zur Erzeugung des Video- und des Audio-Wiedergabetaktes wenigstens einen Discrete Time Oszillator (3; 4) aufweisen, welcher in Abhängigkeit des Abtasttaktes des extern zugeführten Videosignals getaktet wird.

6. Anordnung nach einem der Ansprüche 1 bis 5,
dadurch gekennzeichnet, daß der Video-Wiedergabetakt aus dem Audio-Wiedergabetakt oder der Audio-Wiedergabetakt aus dem Video-Wiedergabetakt abgeleitet wird.

7. Anordnung nach Anspruch 4 und Anspruch 5,
dadurch gekennzeichnet, daß Mittel vorgesehen sind, welche den System Time Clock aus dem Video- oder dem Audio-Wiedergabetakt ableiten.

8. Verwendung der Anordnung nach einem der Ansprüche 1 bis 7 in einem Computer, der auch die Dekomprimierung der Video- und Audio-Daten vornimmt.

## Claims

1. An arrangement for reproducing decompressed video and/or audio data at a video and/or audio reproduction clock frequency, characterized in that means for generating the video and/or audio reproduction clock are provided, which means derive said reproduction clocks from an externally supplied digital video signal.

2. An arrangement as claimed in claim 1, characterized in that the means derive the reproduction clocks from the sampling clock of the externally supplied video signal.

3. An arrangement as claimed in claim 2, characterized in that the sampling clock of the externally supplied video signal is derived from its horizontal synchronizing pulses.

4. An arrangement as claimed in any one of claims 1 to 3, characterized in that the video and/or audio data are decompressed in accordance with the Moving Pictures Experts Group Recommendation, ISO 11172.

5. An arrangement as claimed in any one of claims 1 to 4, characterized in that the means for generating the video and audio reproduction clocks include at least a Discrete Time Oscillator (3; 4) which is clocked in dependence upon the sampling clock of the externally supplied video signal.

6. An arrangement as claimed in any one of claims 1 to 5, characterized in that the video reproduction clock is derived from the audio reproduction clock, or the audio reproduction clock is derived from the video reproduction clock.

7. An arrangement as claimed in claims 4 and 5, characterized in that means are provided which derive the System Time Clock from the video or the audio reproduction clock.

8. Use of the arrangement as claimed in any one of claims 1 to 7 in a computer which also decompresses the video and audio data.

## Revendications

1. Dispositif de reproduction de données vidéo et/ou audio décomprimées dans un rythme de reproduction vidéo et/ou audio, caractérisé en ce que des moyens de production du rythme de reproduction vidéo et/ou audio sont prévus et permettent de dériver ces rythmes de reproduction d'un signal vidéo numérique externe.

2. Dispositif selon la revendication 1, caractérisé en ce que les moyens dérivent les rythmes de reproduction du rythme de balayage du signal vidéo externe.

3. Dispositif selon la revendication 2, caractérisé en ce que le rythme de balayage du signal vidéo externe est dérivé de ses impulsions synchrones horizontales.

4. Dispositif selon l'une des revendications 1 à 3, caractérisé en ce que les données vidéo et/ou audio sont décomprimées conformément à la recommandation Motion Pictures Expert Group selon ISO 11172.

5. Dispositif selon l'une des revendications 1 à 4, caractérisé en ce que les moyens de production du rythme de reproduction vidéo et/ou audio présentent au moins un oscillateur de temps discret (3; 4) qui est cadencé en fonction du rythme de balayage du signal vidéo externe.

6. Dispositif selon l'une des revendications 1 à 5, caractérisé en ce que le rythme de reproduction vidéo est dérivé du rythme de reproduction audio ou le rythme de reproduction audio du rythme de reproduction vidéo.

7. Dispositif selon l'une des revendications 4 ou 5, caractérisé en ce qu'il est prévu des moyens qui dérivent la System Time Clock du rythme de reproduction vidéo et/ou audio.

8. Mise en oeuvre du dispositif selon l'une des revendications 1 à 7, dans un ordinateur qui effectue également la décompression des données vidéo ou audio.
